# EUROPEAN PATENT SPECIFICATION

(11) **EP 2 438 356 B1**
(45) Date of publication and mention of the grant of the patent: **10.05.2017**
(21) Application number: 10783029.1
(22) Date of filing: 21.05.2010
(51) Int. Cl.: F23L 15/04, F28F 19/00

(54) **AN AIR GUIDE SLEEVE AND A PREHEATING APPARATUS**
LUFTFÜHRUNGSHÜLSE UND VORERHITZUNGSVORRICHTUNG
MANCHON DE GUIDAGE D'AIR ET APPAREIL DE PRÉCHAUFFAGE

(30) Priority: 04.06.2009 FI 20095621
(43) Date of publication of application: 11.04.2012
(73) Proprietor: Valmet Technologies Oy, 02150 Espoo (FI)
(72) Inventor: OJANPERÄ, Juha, 33950 Pirkkala (FI)
(74) Representative: Berggren Oy, Tampere
(86) International application number: PCT/FI2010/050414
(87) International publication number: WO 2010/139852

(56) References cited:
- EP-A2- 1 139 056
- WO-A1-2006/121400
- DD-A3- 271 631
- JP-A- S59 137 794
- SU-A1- 866 342
- SU-A1- 1 486 706
- US-A- 2 966 373
- US-A- 3 707 186
- US-A1- 2006 229 395

## Description

### Field of the invention

The invention relates to a flue gas air preheating apparatus for combustion air in a boiler of a power plant, as well as an air guide sleeve in an air pipe of a flue gas air preheater.

### Background of the invention

For preheating combustion air for a solid fuel boiler, flue gas air preheaters (LUVOs) are typically used, in which the heating medium, i.e. flue gas, flows outside heat exchanger pipes, and the medium to be heated, i.e. air, flows inside the heat exchanger pipes. The heat exchanger pipes (below: air pipes) are placed horizontally in the flue gas duct, and the heat exchanger units on different levels are connected to each other by air channels outside the flue gas duct. There are also configurations, in which the flue gas flows inside the pipes and the pipes are vertical.

The patent application JP S59 137794 discloses a method for preventing a tube inlet part from being eroded and to prevent it from buckling. In the method, slits are provided on the downstream end side of a sleeve and is forcibly widened to form a springy contact part, and the part is brought into close contact with the inside surface of a tube by a spring force. With such a sleeve, a medium is prevented from stagnating between the tube and the sleeve, and accordingly, a rise in pressure and buckling are prevented from occurring.

In known configurations, the temperature of the air pipe is significantly low on the air inlet side. The considerable cooling effect of air at the inlet end of the pipe is due to the fact that at the point of inflow, the heat transfer coefficient of the flow is multiple compared to the developed flow deeper in the pipe. Furthermore, the air to be supplied has not been substantially warmed yet. Strong cooling induces a relatively low material temperature at the air inlet end of the heat exchanger structure of the preheater, in spite of the relatively high average temperature. Thus, the acid dew point of the flue gases may be reached at the surface of the heat exchanger structure. The acid dew point, in turn, will cause strong corrosion in the cold heat exchanger structure and erosion in a short time, particularly with difficult fuels. In particular, the joint between the air pipe of the coldest LUVO bundle and the end plate (or the wall of the flue gas duct) may be corroded, if the temperature of the material is too low.

At the cold end (air inlet) of the LUVO pipe of the coldest LUVO bundles, various insulation sleeves fitted around the outer surface of the air pipe have been used to prevent corrosion of the air pipe.

### Brief summary of the invention

Now, a solution has been found that makes it possible to diminish the problem of corrosion at the joint between the air pipe of the preheating apparatus and the end plate.

The preheating apparatus for combustion air according to the invention, in turn, is primarily characterized in what will be presented in the dependent claim 6. The air guide sleeve according to the invention, in turn, is primarily characterized in what will be presented in the independent claim 1. The other, dependent claims will present some preferred embodiments of the invention.

The basic idea of the invention is to form a preheating apparatus for combustion air in a boiler by providing an air guide sleeve at the initial end of the air pipe, at least partly inside the air pipe, the air guide sleeve being made of a poorly heat conductive (*i.e.* thermally insulating) material and designed to diminish turbulence in the air flow.

By means of the air guide sleeve, the air flow to be supplied into the air pipe is kept off the inner surface of the air pipe until the air flow has developed sufficiently, that is, the turbulence in the air flow has been sufficiently levelled out. The heat transfer coefficient of the developed air flow is significantly lower than that of a turbulent air flow, so that the air flow to be supplied from the air guide sleeve does not cause excessive cooling of the air pipe.

In the preheating apparatus, turbulence in the combustion air flow to be supplied to the flue gas air preheater is levelled out by means of a structure keeping the air flow off the inner surface of the air pipe, after which the substantially turbulence-free combustion air flow is brought in contact with the inner surface of the air pipe, to heat the air.

The corrosion shield or air guide sleeve according to the basic idea is made of a poorly heat conductive material, and it can be fitted inside the air pipe to diminish turbulence in the air flow and to guide the combustion air to be heated into the air pipe at a distance from the wall of the flue gas duct.

In one embodiment, the air guide sleeve is fitted to guide the combustion air to be heated into contact with the inner surface of the air pipe at a distance from the initial end of the air pipe, the distance being at least three times the diameter of the air pipe. In this way, the cooling of the outer surface of the initial end of the air pipe and the warming of air at the inlet point are minimized.

In one embodiment, the air guide sleeve is made at least partly of a polymer material, preferably heat-resistant plastic. In an advantageous embodiment, the air guide sleeve is made of polyphenyl sulphide (PPS).

In an embodiment, the apparatus comprises a protective sleeve surrounding the air pipe at the initial end of the air pipe.

In an embodiment, the apparatus comprises a thermal insulation layer surrounding the flue gas duct, and the air guide sleeve extends through the insulation layer and the air pipe does not extend through the insulation layer.

The different embodiments of the above-described configuration, taken separately and in various combinations, provide various advantages. A single embodiment may comprise one or more of the following advantages depending on its implementation:
- the material temperature of the air pipe of the preheating apparatus can be raised at the air inflow point;
- the temperature at the joint between the air pipe of the preheating apparatus and the end plate becomes higher and the problem of corrosion is eliminated;
- the distortion of the temperature of the flue gases can be levelled out;
- the structure becomes simpler and the manufacture is faster.

### Description of the drawings

In the following, the invention will be described in more detail with reference to the appended principle drawings, in which
- Fig. 1: shows a power plant in a principle view;
- Fig. 2: shows an embodiment of the flue gas air preheater in a principle view;
- Fig. 3: shows one inlet of the flue gas air preheater in a cross-sectional view;
- Fig. 4: shows another inlet of the flue gas air preheater;
- Fig. 5: shows an embodiment of the air guide sleeve.

For the sake of clarity, the drawings only show the details necessary for understanding the invention. The structures and details that are not necessary for understanding the invention but are obvious for anyone skilled in the art have been omitted from the figures in order to emphasize the characteristics of the invention.

### Detailed description of the invention

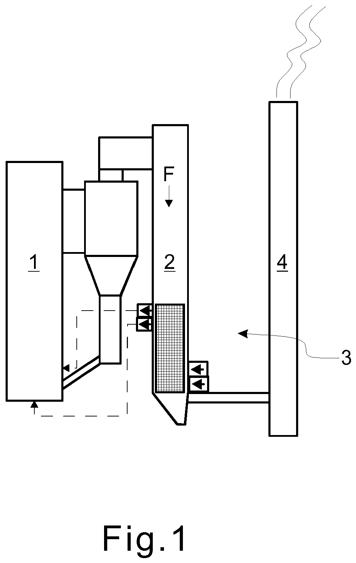

Figure 1 shows a power plant in a principle view. The power plant comprises a furnace 1, a flue gas duct 2, a flue gas air preheater 3, and a stack 4. The flue gas air preheater 3 is placed in the flue gas duct 2. As can be seen from the figure, the flue gas air preheater 3 is placed at the terminal end of the flue gas duct 2 in the flow direction F of the flue gases.

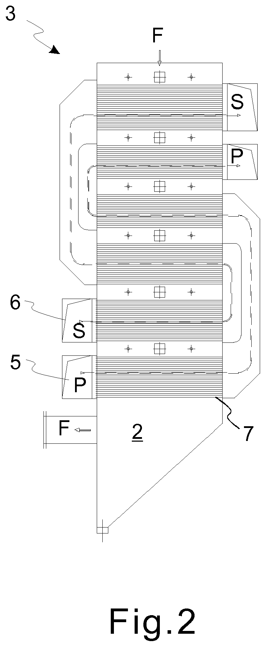

Figure 2 shows an embodiment of the flue gas air preheater 3 in more detail. In this example, the air flows S, P to be heated are guided into the preheater 3 from air supply areas 5, 6 in the lower part. The heated air is discharged from the upper part of the preheater. In the example, the preheater 3 comprises two air circulations, *i.e*. a primary air circulation P and a secondary air circulation S. Both air circulations P, S comprise air pipes 7 which are placed horizontally in the flue gas duct 2, and the heat exchanger units on different levels are connected to each other by channels outside the flue gas duct.

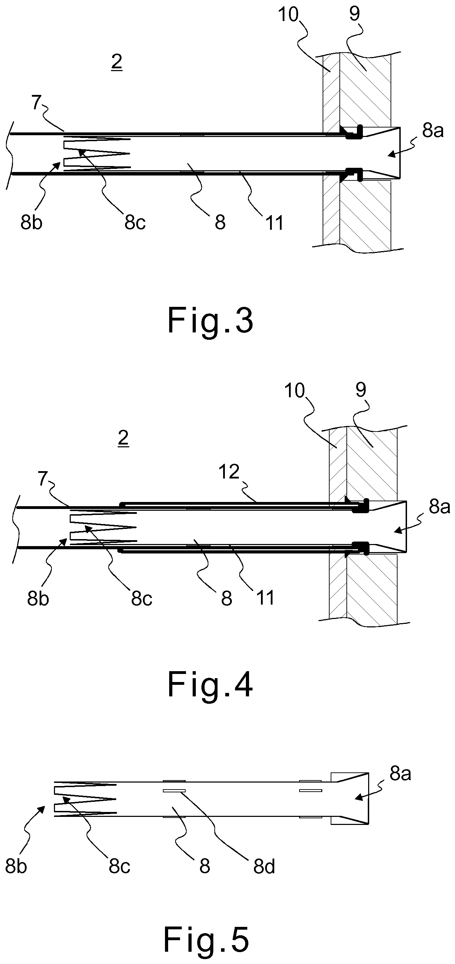

Figure 3 shows one inlet of the flue gas air preheater 3 in a cross-sectional view. A unit in a typical vertical flue gas duct 2 comprises 20 to 30 pipes 7 on top of each other and about a hundred pipes adjacent to each other. The figure shows an air pipe 7 and an air guide sleeve 8 installed in the same. In the example, the air pipe 7 extends a short distance (about 1/3 of the length) into an insulation layer 9 that surrounds the flue gas duct 2. The air pipe 7 is preferably welded in a gas-tight manner to the end plate (or inner wall) 10 of the flue gas duct 2. In the example, the air guide sleeve 8 extends through the insulation layer 9, and the outer surface of the air guide sleeve is connected tightly to the end of the air pipe 7. For example, silicone can be used for sealing. The inflow end 8a of the air guide sleeve 8, *i.e*. the inlet of the air flow, is preferably shaped as a funnel.

The length of the air guide sleeve 8 is advantageously more than three times the diameter of the air pipe 7, preferably about 4 to 8 times the diameter of the air pipe or the air guide sleeve. For example, if the diameter of the air pipe 7 is about 50 mm, the length of the air guide sleeve 8 is preferably about 20 to 40 cm.

The end 8b of the air guide sleeve 8 that is placed inside the air pipe 7 is shaped so as to induce no significant turbulence in the air flow discharging from the air guide sleeve. In the example, the end of the air guide sleeve 8b is shaped so that the portion of the wall of the surface area limited by the outer circumference of the pipe decreases towards the end. In the configuration shown in the figure, this has been achieved by means of notches 8c and thinning. The air guide sleeve 8 is provided with notches 8c that become broader towards the end 8b. The thickness of the wall of the air guide sleeve 8, in turn, has been reduced towards the end 8b. In the example, the shaping that diminishes turbulence in the air flow is provided particularly at the end 8b of the air guide sleeve within a length that constitutes about 1/6 to 1/3 of the length of the air guide sleeve.

In the embodiment shown in Fig. 3, a clearance 11 is provided between the air guide sleeve 8 and the air pipe 7. By means of the clearance 11 and the air guide sleeve 8, the conduction of heat from the outer surface of the air pipe 7 to the inside of the air guide sleeve is efficiently prevented, thereby preventing the cooling of the initial end of the air pipe.

Figure 4, in turn, shows one inlet of a flue gas air preheater according to another embodiment, in a cross-sectional view. In this embodiment, a protective sleeve 12 is provided outside the air pipe 7. The configuration according to Fig. 4 is particularly advantageous in structures to be retrofitted, already comprising the air pipe 7 and the protective sleeve 12. In such a case, the air guide sleeve 8 is fitted in the air inlet pipe 7. The air pipe 7 and the protective sleeve 12 are cut out in such a way that they end inside the insulation material layer 9. In this way, no heat will be conducted along the air pipe 7 and the protective sleeve 12 to the outside of the flue gas duct 2. It is also advantageous to connect the ends of the protective sleeve 12 to the air pipe 7, for example by welding. The air guide pipe 8, in turn, is connected to the end of the air pipe 7 in a gas-tight manner, for example with silicone or by another solution.

Figure 5 shows an advantageous embodiment of the air guide sleeve 8, that is, the corrosion shield. The air guide sleeve 8 and particularly its outflow end 8b are designed to diminish turbulence in the air flow. Advantageously, the end 8b of the air guide sleeve is formed so that the portion of the wall of the surface area limited by the outer circumference of the pipe reduces towards the outflow end 8b of the air guide sleeve 8. In other words, the cross-sectional area available for the air flow increases towards the outflow end 8b. This can be achieved, for example, by means of various notches 8c and/or by thinning of the wall. In the example, the air guide sleeve 8 is provided with splits 8c that become wider towards the end 8b, and the thickness of the wall is reduced towards the end. In the example, the shaping that reduces turbulence in the air flow is provided particularly at the outflow end 8b of the air guide sleeve 8 within a length that is about 1 to 3 three times the diameter of the air guide sleeve.

On the outer surface of the air guide sleeve 8, elements 8d are provided for controlling the clearance 11 between the outer surface of the air guide sleeve and the inner surface of the air pipe 7. In the example, the elements 8d are protrusions on the outer surface of the air guide sleeve 8. In the example, protrusions 8d are provided in two locations in the longitudinal direction of the air guide sleeve 8 and in four locations on the circumference. The shape and the number of the elements 8d may vary according to the embodiment so that the desired clearance 11 between the outer surface of the air guide sleeve 8 and the inner surface of the air pipe 7 can be formed and maintained in use. The thickness and the material properties of the wall of the air guide sleeve 8 as well as the size of the clearance 11 are factors affecting the conduction of heat between the outer surface of the air pipe 7 and the inner surface of the air guide sleeve 8.

The air guide sleeve 8 can be made of a material having sufficient heat resistance and heat insulation properties. The heat resistance is advantageously higher than 200°C, preferably higher than 250°C. The thermal conductivity is advantageously lower than 0.3 W/(K*m) (23°C).

The materials used may be, for example, suitable polymers reinforced with glass fibre, such as PPS (polyphenyl sulphide, one commercial trademark being Fortron 1140 L6) or PPA (polyphtalamide).

By combining, in various ways, the modes and structures disclosed in connection with the different embodiments of the invention presented above, it is possible to produce various embodiments of the invention. Therefore, the above-presented examples must not be interpreted as restrictive to the invention, but the embodiments of the invention may be freely varied within the scope of the inventive features presented in the claims hereinbelow.

## Claims

1. An air guide sleeve (8) for an air pipe (7) in a flue gas air preheater for combustion air in a boiler of a power plant,
- the air guide sleeve (8)
• arranged to be fitted inside an air pipe (7),
• having an inflow end (8a) and a second end (8b) arranged to be placed inside the air pipe, and
• arranged to guide the combustion air to be heated into the air pipe, wherein
- the shaping of the second end (8b) is designed to diminish turbulence in the air flow in such a way that the portion of the wall of the air guide sleeve on the surface area limited by the outer circumference of the air pipe (7) decreases towards the second end (8b), and
- the second end (8b) of the air guide sleeve (8) is provided with splits or notches (8c) which become wider towards its second end (8b), wherein
- the air guide sleeve is made of a material of which heat resistance is higher than 200 °C,
**characterized in that**
- the air guide sleeve is made of a material of which thermal conductivity is lower than 0.3 W/(K*m) at a temperature 23 °C.

2. The air guide sleeve according to claim 1, **characterized in that** the shaping of the second end (8b) that diminishes turbulence in the air flow is provided within a length that constitutes 1/6 to 1/3 of the length of the air guide sleeve.

3. The air guide sleeve according to claim 1 or 2, **characterized in that** at the second end (8b) of the air guide sleeve (8), the wall of the air guide sleeve becomes thinner towards the second end (8b).

4. The air guide sleeve according any of the claims 1 to 3, **characterized in that** the air guide sleeve (8) is made of polyphenyl sulphide.

5. The air guide sleeve according to any of the claims 1 to 4, **characterized in that** the air guide sleeve (8) is arranged to be fitted inside an air pipe (7) to guide the combustion air to be heated in contact with the inner surface of the air pipe (7) at a distance from an initial end of the air pipe, the distance being at least three times the diameter of the air pipe.

6. A flue gas air preheating apparatus (3) for combustion air, the flue gas air preheating apparatus (3) comprising
- an air pipe (7) configured to be placed in a flue gas duct (2) of a boiler of a power plant, the air pipe (7) having an initial end, and
- an air guide sleeve (8) according to any of the claims 1 to 5, the air guide sleeve (8) being provided at the initial end of the air pipe (7), at least partly inside the air pipe (7), such that the second end (8b) of the air guide sleeve (8) is placed inside the air pipe.

7. The flue gas air preheating apparatus according to the claim 6, **characterized in that** the air guide sleeve (8) is fitted to guide the combustion air to be heated in contact with the inner surface of the air pipe (7) at a distance from the initial end of the air pipe, the distance being at least three times the diameter of the air pipe.

8. The flue gas air preheating apparatus according to the claim 6 or 7, **characterized in that** the apparatus comprises a protective sleeve (12) surrounding the air pipe at the initial end of the air pipe (7).

9. A boiler suitable for use in a power plant, the boiler comprising
- a flue gas duct (2) and
- a flue gas air preheating apparatus (3) according to any of the claims 6 to 8, wherein
- the air pipe (7) of a flue gas air preheating apparatus (3) is placed in the flue gas duct (2) of the boiler.

10. The boiler according to the claim 9, **characterized in that** the boiler comprises a thermal insulation layer (9) surrounding the flue gas duct (2), and the air guide sleeve (8) extends through the insulation layer (9) and the air pipe (7) does not extend through the insulation layer (9).

## Patentansprüche

1. Eine Luftführungshülse (8) für eine Luftleitung (7) in einem Rauchgas-Luftvorwärmer für Verbrennungsluft in einem Kessel eines Kraftwerks,
- wobei die Luftführungshülse (8)
• angeordnet ist, um im Inneren einer Luftleitung (7) eingesetzt zu werden,
• ein Zulaufende (8a) und ein zweites Ende (8b) aufweist, die angeordnet sind, um im Inneren der Luftleitung platziert zu werden, und
• angeordnet ist, um die zu erwärmende Verbrennungsluft in die Luftleitung zu leiten, wobei
- die Ausformung des zweiten Endes (8b) dergestalt ist, dass die Turbulenz in dem Luftstrom so verringert wird, dass der Abschnitt der Wand der Luftführungshülse auf dem Oberflächenbereich, der von dem Außenumfang der Luftleitung (7) begrenzt wird, zum zweiten Ende (8b) hin abnimmt, und
- das zweite Ende (8b) der Luftführungshülse (8) mit Schlitzen oder Kerben (8c) versehen ist, die zu ihrem zweiten Ende (8b) hin breiter werden, wobei
- die Luftführungshülse aus einem Material hergestellt ist, deren Wärmebeständigkeit höher als 200 °C ist,
**dadurch gekennzeichnet, dass**
- die Luftführungshülse aus einem Material hergestellt ist, deren Wärmeleitfähigkeit geringer als 0,3 W/(K*m) bei einer Temperatur von 23 °C ist.

2. Luftführungshülse gemäß Anspruch 1, **dadurch gekennzeichnet, dass** die Ausformung des zweiten Endes (8b), das die Turbulenz in dem Luftstrom verringert, eine Länge hat, die 1/6 bis 1/3 der Länge der Luftführungshülse beträgt.

3. Luftführungshülse gemäß Anspruch 1 oder 2, **dadurch gekennzeichnet, dass** am zweiten Ende (8b) der Luftführungshülse (8) die Wand der Luftführungshülse zum zweiten Ende (8b) hin dünner wird.

4. Luftführungshülse gemäß einem der vorhergehenden Ansprüche 1 bis 3, **dadurch gekennzeichnet, dass** die Luftführungshülse (8) aus Polyphenylsulfid hergestellt ist.

5. Luftführungshülse gemäß einem der Ansprüche 1 bis 4, **dadurch gekennzeichnet, dass** die Luftführungshülse (8) angeordnet ist, um im Inneren einer Luftleitung (7) eingesetzt zu werden, um die zu erwärmende Verbrennungsluft in Kontakt mit der Innenfläche der Luftleitung (7) in einem Abstand zu einem Kopfende der Luftleitung zu leiten, wobei der Abstand mindestens dem dreifachen Durchmesser der Luftleitung entspricht.

6. Eine Rauchgas-Luftvorerwärmungsvorrichtung (3) für Verbrennungsluft, wobei die Rauchgas-Luftvorerwärmungsvorrichtung (3) Folgendes aufweist:
- eine Luftleitung (7), die konfiguriert ist, um in einer Rauchgasleitung (2) eines Kessels eines Kraftwerks platziert zu werden, wobei die Luftleitung (7) ein Kopfende aufweist, und
- eine Luftführungshülse (8) gemäß einem der Ansprüche 1 bis 5, wobei die Luftführungshülse (8) am Kopfende der Luftleitung (7) vorgesehen ist, mindestens teilweise im Inneren der Luftleitung (7), sodass sich das zweite Ende (8b) der Luftführungshülse (8b) im Inneren der Luftleitung befindet.

7. Rauchgas-Luftvorerwärmungsvorrichtung gemäß Anspruch 6, **dadurch gekennzeichnet, dass** die Luftführungshülse (8) so eingesetzt ist, um die zu erwärmende Verbrennungsluft in Kontakt mit der Innenfläche der Luftleitung (7) in einem Abstand zum Kopfende der Luftleitung zu leiten, wobei der Abstand mindestens dem dreifachen Durchmesser der Luftleitung entspricht.

8. Rauchgas-Luftvorerwärmungsvorrichtung gemäß Anspruch 6 oder 7, **dadurch gekennzeichnet, dass** die Vorrichtung eine Schutzhülse (12) aufweist, die die Luftleitung am Kopfende der Luftleitung (7) umgibt.

9. Ein Kessel geeignet zur Verwendung in einem Kraftwerk, wobei der Kessel Folgendes aufweist:
- eine Rauchgasleitung (2) und
- eine Rauchgas-Luftvorerwärmungsvorrichtung (3) gemäß einem der Ansprüche 6 bis 8, wobei
- die Luftleitung (7) der Rauchgas-Luftvorerwärmungsvorrichtung (3) sich in der Rauchgasleitung (2) des Kessels befindet.

10. Kessel gemäß Anspruch 9, **dadurch gekennzeichnet, dass** der Kessel eine die Rauchgasleitung (2) umgebende Wärmedämmschicht (9) aufweist, und die Luftführungshülse (8) sich durch die Dämmschicht (9) erstreckt und die Luftleitung (7) sich nicht durch Dämmschicht (9) erstreckt.

## Revendications

1. Manchon de guidage d'air (8) pour une conduite d'air (7) dans un appareil de préchauffage d'air de gaz de carneau pour de l'air de combustion dans une chaudière d'une centrale électrique,
- le manchon de guidage d'air (8)
• étant agencé pour être mis en place à l'intérieur d'une conduite d'air (7),
• ayant une extrémité de flux entrant (8a) et une deuxième extrémité (8b) agencée pour être placée à l'intérieur de la conduite d'air, et
• étant agencé pour guider l'air de combustion à chauffer dans la conduite d'air,
- la mise en forme de la deuxième extrémité (8b) étant conçue pour diminuer les turbulences dans le flux d'air de telle sorte que la partie de la paroi du manchon de guidage d'air sur l'aire limitée par la circonférence extérieure de la conduite d'air (7) diminue en direction de la deuxième extrémité (8b), et
- la deuxième extrémité (8b) du manchon de guidage d'air (8) étant dotée de fentes ou d'encoches (8c) qui s'élargissent en direction de sa deuxième extrémité (8b),
- le manchon de guidage d'air étant constitué d'un matériau dont la résistance thermique est supérieure à 200°C,
**caractérisé en ce que**
- le manchon de guidage d'air est constitué d'un matériau dont la conductivité thermique est inférieure à 0,3 W/(K*m) à une température de 23°C.

2. Manchon de guidage d'air selon la revendication 1, **caractérisé en ce que** la mise en forme de la deuxième extrémité (8b) qui diminue les turbulences dans le flux d'air est prévue dans le cadre d'une longueur qui constitue 1/6 à 1/3 de la longueur du manchon de guidage d'air.

3. Manchon de guidage d'air selon la revendication 1 ou 2, **caractérisé en ce que**, au niveau de la deuxième extrémité (8b) du manchon de guidage d'air (8), la paroi du manchon de guidage d'air s'amincit en direction de la deuxième extrémité (8b).

4. Manchon de guidage d'air selon l'une quelconque des revendications 1 à 3, **caractérisé en ce que** le manchon de guidage d'air (8) est réalisé en sulfure de polyphényle.

5. Manchon de guidage d'air selon l'une quelconque des revendications 1 à 4, **caractérisé en ce que** le manchon de guidage d'air (8) est agencé pour être mis en place dans une conduite d'air (7) pour guider l'air de combustion à chauffer et le mettre en contact avec la surface interne de la conduite d'air (7) à distance d'une extrémité initiale de la conduite d'air, la distance étant au moins trois fois le diamètre de la conduite d'air.

6. Appareil de préchauffage d'air de gaz de carneau (3) pour un air de combustion, l'appareil de préchauffage d'air de gaz de carneau (3) comprenant
- une conduite d'air (7) configurée pour être placée dans un tuyau de gaz de carneau (2) d'une chaudière d'une centrale électrique, la conduite d'air (7) ayant une extrémité initiale, et
- un manchon de guidage d'air (8) selon l'une quelconque des revendications 1 à 5, le manchon de guidage d'air (8) étant prévu au niveau de l'extrémité initiale de la conduite d'air (7), au moins partiellement à l'intérieur de la conduite d'air (7), de telle sorte que la deuxième extrémité (8b) du manchon de guidage d'air (8) est placée à l'intérieur de la conduite d'air.

7. Appareil de préchauffage d'air de gaz de carneau selon la revendication 6, **caractérisé en ce que** le manchon de guidage d'air (8) est mis en place pour guider l'air de combustion à chauffer et le mettre en contact avec la surface interne de la conduite d'air (7) à distance de l'extrémité initiale de la conduite d'air, la distance étant au moins trois fois le diamètre de la conduite d'air.

8. Appareil de préchauffage d'air de gaz de carneau selon la revendication 6 ou 7, **caractérisé en ce que** l'appareil comprend un manchon de protection (12) entourant la conduite d'air au niveau de l'extrémité initiale de la conduite d'air (7).

9. Chaudière adéquate pour une utilisation dans une centrale électrique, la chaudière comprenant
- un tuyau de gaz de carneau (2) et
- un appareil de préchauffage d'air de gaz de carneau (3) selon l'une quelconque des revendications 6 à 8,
- la conduite d'air (7) d'un appareil de préchauffage d'air de gaz de carneau (3) étant placée dans le tuyau de gaz de carneau (2) de la chaudière.

10. Chaudière selon la revendication 9, **caractérisée en ce que** la chaudière comprend une couche d'isolation thermique (9) entourant le tuyau de gaz de carneau (2), et le manchon de guidage d'air (8) s'étend à travers la couche d'isolation (9) et la conduite d'air (7) ne s'étend pas à travers la couche d'isolation (9).
